**Europäisches Patentamt**

**European Patent Office**

**Office européen des brevets**

(11) Veröffentlichungsnummer : **0 344 429 B1**

(12) # EUROPÄISCHE PATENTSCHRIFT

(45) Veröffentlichungstag der Patentschrift :
**01.04.92 Patentblatt 92/14**

(51) Int. Cl.⁵ : **F16B 13/12, F16B 13/02**

(21) Anmeldenummer : **89106032.9**

(22) Anmeldetag : **06.04.89**

(54) **Spreizdübel aus Kunststoff.**

(30) Priorität : **01.06.88 DE 3818652**

(43) Veröffentlichungstag der Anmeldung :
**06.12.89 Patentblatt 89/49**

(45) Bekanntmachung des Hinweises auf die
Patenterteilung :
**01.04.92 Patentblatt 92/14**

(84) Benannte Vertragsstaaten :
**AT BE CH DE ES FR GB IT LI NL**

(56) Entgegenhaltungen :
**CH-A- 485 129**

(73) Patentinhaber : **fischerwerke Artur Fischer
GmbH & Co. KG
Weinhalde 14 - 18
W-7244 Waldachtal 3/Tumlingen (DE)**

(72) Erfinder : **Fischer, Artur, Prof. Dr. h. c.
Weinhalde 34
W-7244 Waldachtal 3/Tumlingen (DE)**

## Beschreibung

Die Erfindung betrifft einen Spreizdübel aus Kunststoff gemäß der Gattung des Hauptanspruchs (CH-A 485 129).

Es sind Spreizdübel aus Kunststoff bekannt, die zum Einsetzen in ein Bohrloch eines Mauerwerks und zum Einschrauben einer Befestigungsschraube verwendet werden. Beim Einschrauben der Befestigungsschraube werden am Spreizdübel ausgebildete Spreizschenkel, die sich in das Bohrloch erstrecken, aufgespreizt. Durch den Spreizdruck wird eine feste Verankerung des Dübels zusammen mit der Befestigungsschraube erreicht. Die bekannten Spreizdübel besitzen an ihren Spreizschenkeln an deren Außenseite abwechselnd hintereinander angeordnete Kerben und Zähne. Durch die eindringende Befestigungsschraube werden die Zähne gegen die Bohrlochwand gepreßt und die dazwischen befindlichen Kerben werden durch Materialverformung teilweise ausgefüllt. Dies geschieht dadurch, daß die eindringende Befestigungsschraube von innen das Kunststoffmaterial im Bereich der Kerben nach außen drückt. Versuche haben gezeigt, daß durch die Nachgiebigkeit des Kunststoffs im Bereich der Kerben zwar ein erleichtertes Eindrehen der Befestigungsschraube möglich ist, jedoch andererseites besonders hohe Haltewerte oftmals nicht erzielt werden können.

Der Erfindung liegt die Aufgabe zugrunde, einen Spreizdübel der eingangs genannten Gattung derart weiterzubilden, daß höhere Haltewerte durch eine stärkere Verpressung im Bohrloch erreicht werden.

Die Lösung dieser Aufgabe wird bei einem Spreizdübel der eingangs genannten Gattung durch die im kennzeichnenden Teil des Hauptanspruchs angegebenen Merkmale erhalten. Durch eine Verringerung der Kerbentiefe, insbesondere bei den am aufspreizbaren Ende des Spreizdübels befindlichen Kerben, wird erreicht, daß dort keine oder nur noch eine sehr geringe Materialverformung durch den von der Befestigungsschraube ausgehenden Spreizdruck auftreten kann. Durch die geringere Kerbentiefe wird die Dicke des Kunststoffmaterials erhöht und somit in diesem Bereich ein höherer Spreizdruck erzeugt. Da der maximale Spreizdruck durch die erfindungsgemäße Anordnung von Kerben mit geringerer Tiefe erst bei vollständigem Einschrauben der Befestigungsschraube entsteht, läßt sich die Befestigungsschraube auch beim Erfindungsgegenstand problemlos einschrauben. Außer einer Spreizkrafterhöhung und einer damit verbundenen sichereren Befestigung wird eine bessere Schraubenführung und eine Verbesserung der Drehsicherung erzielt.

Besonders vorteilhaft ist es, die hintereinander angeordneten Kerben der Spreizschenkel wenigstens über einen Teilbereich mit unterschiedlichen Tiefen zu versehen, wobei eine stetige Abnahme der Kerbentiefe zum aufspreizbaren Ende hin vorgesehen wird. Diese Maßnahme bewirkt, daß beim Einschrauben der Befestigungsschraube die Spreizkraft entsprechend stetig zunimmt, bis bei vollständig eingeschraubter Befestigungsschraube der maximale Haltewert erreicht wird.

Weiterhin kann vorgesehen sein, daß die für die Aufnahme der Befestigungsschraube vorgesehene Bohrung, welche spitz zuläuft, mit ihrer Spitze im Bereich der mit reduzierter Tiefe ausgebildeten Kerben endet. Dadurch wird eine sehr gute Führung beim Eindrehen der Befestigungsschraube erreicht, und zwar bis in den Bereich der erhöhten Spreizkraft, die wie oben beschrieben im Bereich der verringerten Kerbentiefen am Spreizdübel ansteigt.

Die Erfindung wird nachfolgend anhand der Zeichnung näher erläutert.

Es zeigen:

Figur 1 einen Spreizdübel halbseitig im Längsschnitt, der den Stand der Technik zeigt,

Figur 2 einen erfindungsgemäßen Spreizdübel mit abnehmender Kerbentiefe und

Figur 3 den erfindungsgemäßen Spreizdübel gemäß Figur 2, eingesetzt in ein Bohrloch und mit eingeschraubter Befestigungsschraube.

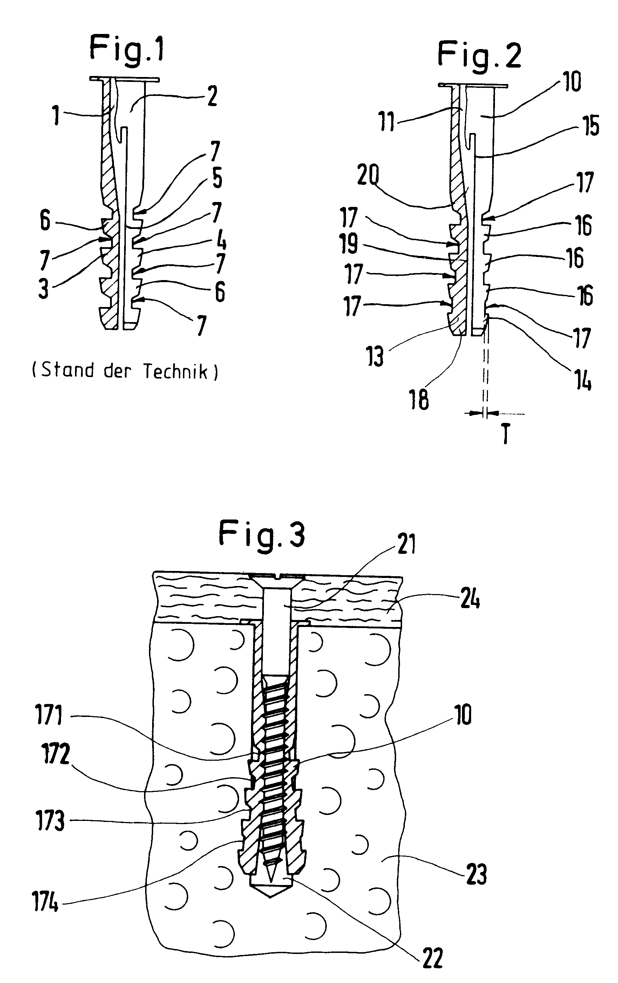

Der in Figur 1 dargestellte Spreizdübel besitzt eine Bohrung 1, in die eine Befestigungsschraube einschraubbar ist. Der hülsenförmige Schaft 2 geht über in zwei gegenüberliegende Spreizschenkel 3, 4, die durch einen Längsschlitz 5 getrennt sind. An der Außenseite der Spreizschenkel 3, 4 stehen Zähne 6 ab, zwischen denen Kerben 7 ausgebildet sind. Die Kerben 7 haben alle eine einheitliche Tiefe, wie dies bei derartigen Spreizdübeln, die dem Stand der Technik entsprechen, üblich ist.

Bei dem in Figur 2 dargestellten erfindungsgemäßen Spreizdübel sind dagegen zwischen den Zähnen 16 Kerben 17 ausgebildet, deren Tiefe zum aufspreizbaren Ende 18 hin abnimmt, so daß die dem aufspreizbaren Ende 18 benachbarte Kerbe 17 die geringste Tiefe T aufweist.

Außerdem besitzt der erfindungsgemäße Spreizdübel 10 eine sich verjüngende Bohrung 11, deren Spitze 19 in dem Bereich der Spreizschenkel 13, 14 liegt, wo sich Kerben 17 mit reduzierter Tiefe befinden. Die durch den Schlitz 15 gebildeten gegenüberliegenden Innenflächen der beiden Spreizschenkel 13, 14 besitzen somit jeweils eine zur Spitze 19 hin spitz zulaufende Rinne 20.

In Figur 3 ist der erfindungsgemäße Spreizdübel 10 mit eingesetzter Befestigungsschraube 21 in einem Bohrloch 22 eines Mauerwerks 23 dargestellt. Mit der Befestigungsschraube 21 wird eine Leiste 24 am Mauerwerk 23 befestigt. Insbesondere im Bereich der Kerben 171 und 172 wurde das Kunststoffmaterial durch den

2

von der Befestigungsschraube 21 ausgeübten Druck nach außen verformt. Bei der Kerbe 173 und insbesondere bei der Kerbe 174 ist dagegen nur noch eine geringe Materialverformung vorhanden, da die Materialstärke in diesem Bereich wesentlich größer ist als im Bereich der Kerben 171 und 172. Auf diese Weise wird am Ende 18 eine starke Aufspreizung und eine entsprechend starke Klemmwirkung erreicht.

## Patentansprüche

1. Spreizdübel aus Kunststoff oder dergleichen Material zum Einsetzen in ein Bohrloch eines Mauerwerks mit einer sich verjüngenden Bohrung, in die eine Befestigungsschraube einschraubbar ist, und mit an ihren Außenflächen abwechselnd Zähne und Kerben aufweisenden Spreizschenkeln, zwischen denen ein Längsschlitz verläuft, **dadurch gekennzeichnet**, daß die Tiefe der am aufspreizbaren Ende (18) des Spreizdübels (10) befindlichen Kerben (17) geringer ist als die Tiefe der übrigen Kerben (17).

2. Spreizdübel nach Anspruch 1, **dadurch gekennzechneit**, daß die Tiefe der aufeinanderfolgenden Kerben (17; 171 bis 174) zum aufspreizbaren Ende (18) hin wenigstens über einen Teilbereich der gesamten Spreizschenkellänge stetig abnimmt.

3. Spreizdübel nach einem der Ansprüche 1 oder 2, **dadurch gekennzeichnet**, daß sich die Spitze (19) der sich verjüngenden Bohrung (11) in dem Schenkelbereich befindet, in welchem Kerben (17) mit reduzierter Tiefe vorhanden sind.

## Claims

1. An expansible plug of plastics or similar material for insertion into a hole drilled in masonry, the plug having a tapering bore into which a fixing screw can be screwed, and having expansible arms with teeth and notches arranged alternately on their outer surfaces, between which expansible arms extends a longitudinal slot, characterized in that the depth of the notches (17) located at the expansible end (18) of the expansible plug (10) is shallower than the depth of the remaining notches (17).

2. An expansible plug according to claim 1, characterized in that the depth of successive notches (17; 171 to 174) decreases continuously towards the expansible end (18) at least for a part of the total length of the expansible arms.

3. An expansible plug according to claim 1 or 2, characterized in that the apex (19) of the tapering bore (11) is located in that region of the arms in which there are notches (17) of reduced depth.

## Revendications

1. Cheville expansible en une matière plastique ou en une matière analogue, destinée à être placée dans un trou percé dans un ouvrage de maçonnerie et comportant un trou qui se rétrécit et dans lequel une vis de fixation peut être vissée, cette cheville comportant sur ses surfaces externes des branches expansibles, présentant alternativement des dents et des encoches, et entre lesquelles il y a une fente longitudinale, cheville caractérisée en ce que la profondeur des encoches (17) se trouvant à l'extrémité (18) expansible de la cheville (10) expansible est plus petite que la profondeur des autres encoches (17).

2. Cheville expansible selon la revendication 1, caractérisée en ce que la profondeur des encoches (17 ; 171 à 174) successives diminue constamment vers l'extrémité (18) expansible, au moins sur une zone partielle de la totalité de la longueur des branches expansibles.

3. Cheville expansible selon l'une des revendications 1 ou 2, caractérisée en ce que la pointe (19) du trou (11) qui se rétrécit se trouve dans la zone de branche dans laquelle il y a des encoches (17) dont la profondeur est réduite.

# Fig.1

(Stand der Technik)

# Fig.2

# Fig.3